# EUROPEAN PATENT SPECIFICATION

(11) **EP 0 766 012 B1**
(45) Date of publication and mention of the grant of the patent: **28.11.2001**
(21) Application number: 96306577.6
(22) Date of filing: 10.09.1996
(51) Int. Cl.: F16B 19/10

(54) **Blind rivet assembly**
Blindniet
Rivet aveugle

(30) Priority: 23.09.1995 GB 9519475
(43) Date of publication of application: 02.04.1997
(73) Proprietor: EMHART INC., Newark, Delaware 19711 (US)
(72) Inventor: Armstrong, Donald W., Sutton Coldfield, West Midlands B76 8NU (GB); Gough, Jill, Birmingham, B24 0QD (GB)
(74) Representative: Dlugosz, Anthony Charles

(56) References cited:
- EP-A- 0 536 957
- EP-A- 0 672 838
- EP-A- 0 730 100
- DE-A- 4 343 171
- US-A- 2 779 955
- US-A- 3 300 798

## Description

The present invention relates to an improved blind rivet assembly, and in particular to an improved closed end rivet assembly.

A typical known closed end blind rivet assembly comprising a hollow rivet body and a pulling mandrel having a stem is shown in US 3 438 301. The stem slidably fits the bore of the rivet body and the mandrel head is disposed adjacent the closed end of the rivet body. The hollow rivet has one or more annular grooves pressed, for example by rolling, radially inward towards a shank of the pulling stem which is spaced from the rivet body. In the course of restriction of the stem, the grooves in the rivet are substantially closed, the rivet body is enlarged, both to fill the hole of the workpiece through which it projects and on the blind side of the workpiece to secure the rivet. When provided with a breakneck portion, the pulling stem will desirably fracture on completion of setting.

During setting, the grooved body portion, under the action of the pulling mandrel, slides or telescopes under an adjacent part of the rivet body.

Such blind rivet assemblies have a number of disadvantages. While providing a high clamping load, the setting load profile is such that closed end rivets cannot be used in applications in which the workpieces are thin or of soft materials, or with flexible materials such as plastics or hard rubbers. This is because the setting load profile is excessive in relation to the strength of workpiece material, and the workpiece becomes damaged. In addition, the mandrel stem may be pulled through the body to project beyond the flange. At best this is unsightly.

EP 0 536 957 discloses a closed-end rivet as described in the pre-characterising part of claim 1.

According to the first aspect of the present invention, there is provided a closed-end rivet assembly comprising a mandrel having a mandrel head, a breakneck portion and a pulling stem; and a rivet sleeve extruded over the mandrel, having a first closed end and a second open end from which a flange extends, at least two grooves are formed on the rivet sleeve and a gap formed between the rivet sleeve and the mandrel between the grooves, characterised in that the sleeve bulges outwardly between the two grooves.

According to a second aspect of the invention there is provided a method of manufacture of a closed-end rivet assembly comprising the steps of
a) taking a mandrel having a mandrel head, a breakneck portion and a pulling stem;
b) extruding a sleeve over the mandrel so that the inside of the sleeve is in intimate contact with the mandrel including the breakneck portion;
c) forming a flange on the sleeve; and
d) forming at least two grooves on the sleeve causing the sleeve of the rivet to bulge outwardly to form a gap between the sleeve and the mandrel between the grooves.

According to the third aspect of the present invention, there is provided a closed-end rivet assembly which is manufactured in accordance with the method described in the second aspect of the invention.

The invention will now be described, by way of example only, with reference to the accompanying drawings, in which:
Figure 1 shows a rivet sleeve extruded over a pulling mandrel.
Figure 2 shows the assembly of Figure 1 to which grooves have been introduced; and
Figure 3 shows the assembly of Figure 2 in a set condition.

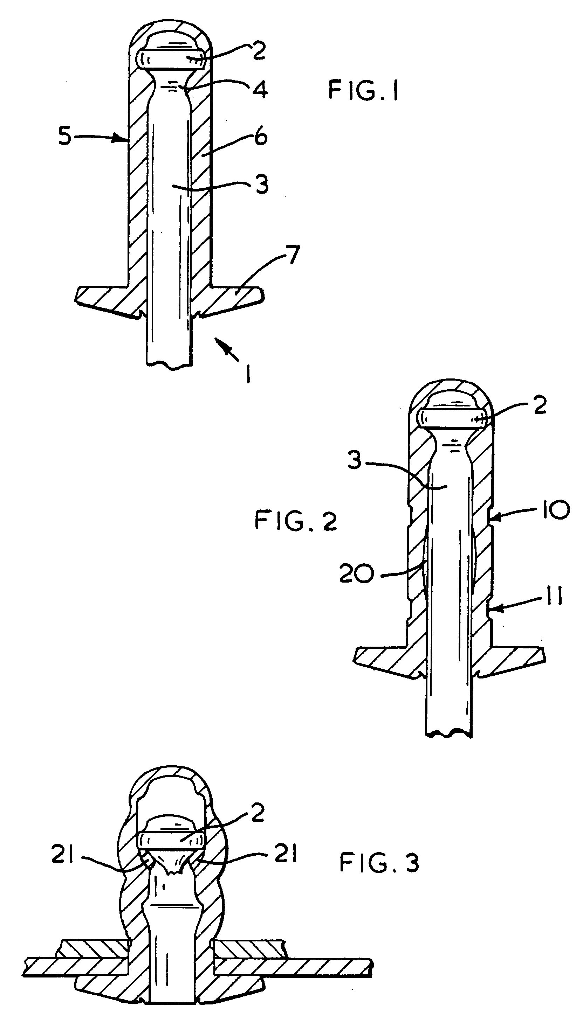

Figure 1 shows a mandrel 1 having a mandrel head 2, a pulling stem 3 and a breakneck portion 4 intermediate the head 2 and the stem 3. Except for the mandrel head 2 and the breakneck portion 4, the pulling stem is of substantially uniform diameter. Onto the mandrel has been extruded a rivet sleeve 5. The sleeve 5 is preferably formed of aluminium, or an alloy thereof. The sleeve 5 is formed having a body portion 6 and a flange 7. The body portion is of substantially uniform diameter along its length. Since the sleeve has been extruded onto the mandrel, the inside of the sleeve is in intimate contact with the mandrel, even filling the breakneck portion 4 of the mandrel.

The rivet assembly is then rolled at two places 10,11. The rolling causes the formation of grooves, causing the rivet body to move away from the mandrel at a position 20 between the grooves. The rolling at the grooves also raises the work hardening of the sleeve material at these points.

The rivet assembly can now be supplied for use.

Setting of the rivet can be performed in a conventional manner, the load applied to the mandrel head being transmitted axially to the rivet body.

Since the material between the grooves is softer than the work hardened grooves, and the outward bulging of the rivet body has been initiated by the groove formation, the axial pressure causes the rivet body between the grooves to bulge further. In other words, deformation of the rivet body occurs first between the work hardened grooves during setting of the rivet assembly.

Further axial pressure causes the upper groove to collapse and the mandrel head moves towards the flange in a conventional manner. The body material under the head is sheared off in a ring 21. The rivet body bulges outward above the flange, causing further movement of material beneath the mandrel head to form a ledge upon which the mandrel head rests.

Further axial load causes the mandrel to break at the breakneck portion. In other words, the standard axial load is dissipated both along the axis of the rivet and in a direction normal thereto. The force acting normal to the rivet axis is the force causing the rivet body to move radially outwards. This means that the resultant of the setting load which is required to be supported by the workpiece is reduced, so the likelihood of distortion and damage to the workpiece is reduced.

Also, there is a further advantage that, since the build up of material beneath the head of the mandrel is similar in strength to the internal portion of the rivet body adjacent to the rivet flange, the mandrel is caused to break at a position remote from the flange.

The bulging of the rivet body both between the grooves and between the upper groove and the head of the rivet body results in a distinctive double-bulge setting characteristic, as can be seen in Figure 3, on the side of the workpiece assembly remote from the rivet flange.

## Claims

1. A closed-end rivet assembly comprising a mandrel (1) having a mandrel head (2), a breakneck portion (4) and a pulling stem (3); and a rivet sleeve (5) extruded over the mandrel, having a first closed end and a second open end from which a flange (7) extends, at least two radial grooves (10, 11) are formed on the rivet sleeve (5), and a gap (20) formed between the rivet sleeve and mandrel between the grooves, **characterised in that** the sleeve bulges outwardly between the two grooves to form the gap between the rivet sleeve and the mandrel between the grooves.

2. A closed-end rivet assembly according to Claim 1, **characterised in that** an internal surface of the rivet sleeve (5) is in intimate contact with the breakneck portion (4) of the mandrel (1).

3. A method of manufacture of a closed-end rivet assembly comprising the steps of
a) taking a mandrel (1) having a mandrel head (2), a breakneck portion (4) and a pulling stem (3);
b) extruding a sleeve (5) over the mandrel (1) so that the inside of the sleeve (5) is in intimate contact with the mandrel (1) including the breakneck (4) portion of the mandrel (1) ;
c) forming a flange on the sleeve; and
d) forming at least two grooves on the sleeve causing the sleeve (5) of the rivet to bulge outwardly to form a gap between the sleeve (5) and the mandrel (1) between the grooves (10, 11).

4. A closed end rivet assembly which is manufactured in accordance with the method of claim 3.

## Patentansprüche

1. Endverschlossene Nietvorrichtung umfassend einen Dorn (1) mit einen Domkopf (2), einem Bruchhalsabschnitt (4) und einem Zugstamm (3); und eine über den Dorn extrudierte Niethülse (5), die ein erstes geschlossenes Ende und ein zweites geschlossenes Ende aufweist, von dem aus sich ein Flansch (7) erstreckt, mindestens zwei radiale Nute (10, 11), die auf der Niethülse (5) gebildet sind, und ein zwischen der Niethülse und dem Dorn geformter Zwischenraum (20) zwischen den Nuten, **dadurch gekennzeichnet, dass** die Hülse sich zwischen den zwei Nuten auswärts ausbuchtet, um zwischen den Nuten den Zwischenraum zwischen der Niethülse und dem Dorn zu bilden.

2. Endverschlossene Nietvorrichtung nach Anspruch 1, **dadurch gekennzeichnet, dass** eine Innenoberfläche der Niethülse (5) in engem Kontakt mit dem Bruchhalsabschnitt (4) des Dorns (1) ist.

3. Verfahren zur Herstellung einer endverschlossenen Nietvorrichtung, wobei es folgende Schritte umfasst:
a) Einsatz eines Dorns (1) mit einem Dornkopf (2), einem Bruchhalsabschmitt (4) und einem Zugstamm (3);
b) Extrudieren einer Hülse (5) über den Dorn (1), so dass das Innere der Hülse (5) in engem Kontakt mit dem Dorn (1) ist, umfassend den Bruchhalsabschnitt (4) des Dorns (1);
c) Bildung eines Flansches auf der Hülse; und
d) Bildung von mindestens zwei Nuten auf der Hülse, was die Hülse (5) des Niets dazu bringt, sich auswärts auszubuchten, um zwischen den Nuten (10, 11) einen Zwischenraum zwischen der Hülse (5) und dem Dom (1) zu bilden.

4. Endverschlossene Nietvorrichtung, die gemäß dem Verfahren nach Anspruch 3 hergestellt ist.

## Revendications

1. Rivet à extrémité fermée comprenant un mandrin (1) possédant une tête de mandrin (2), une partie à étranglement (4) et une tige de tirage (3) ; et un manchon de rivet (5) extrudé par dessus le mandrin, possédant une première extrémité fermée et une deuxième extrémité ouverte à partir de laquelle s'étend une bride (7), dans lequel au moins deux gorges radiales (10, 11) sont formées sur le manchon de rivet (5) et où un espace (20) est formé entre le manchon de rivet et le mandrin entre les gorges, **caractérisé en ce que** le manchon est bombé extérieurement entre les deux gorges pour constituer l'espace entre le manchon de rivet et le mandrin entre les gorges.

2. Rivet à extrémité fermée selon la revendication 1, **caractérisé en ce qu'**une surface intérieure du manchon de rivet (5) est en contact intime avec la partie à étranglement (4) du mandrin (1).

3. Méthode pour fabriquer un rivet à extrémité fermée comprenant les étapes consistant à
a) prendre un mandrin (1) possédant une tête de mandrin (2), une partie à étranglement (4) et une tige de tirage (3) ;
b) extruder un manchon (5) par dessus le mandrin (1) de façon à ce que l'intérieur du manchon (5) soit en contact intime avec le mandrin (1), y compris dans la partie à étranglement (4) du mandrin (1) ;
c) former une bride sur le manchon ; et à
d) former au moins deux gorges sur le manchon, ce qui provoque le bombement du manchon (5) du rivet vers l'extérieur pour former un espace entre le manchon (5) et le mandrin (1) entre les gorges (10, 11).

4. Rivet à extrémité fermée fabriqué selon la méthode de la revendication 3.
